# EUROPÄISCHE PATENTSCHRIFT

(11) **EP 2 766 640 B1**
(45) Veröffentlichungstag und Bekanntmachung des Hinweises auf die Patenterteilung: **02.03.2016**
(21) Anmeldenummer: 12780439.1
(22) Anmeldetag: 12.10.2012
(51) Int. Cl.: F16H 61/4052, F16H 61/433, F16H 61/47, H02P 9/06

(54) **HYDROSTATISCHE ANTRIEBSVORRICHTUNG**
HYDROSTATIC DRIVE DEVICE
DISPOSITIF D'ENTRAÎNEMENT HYDROSTATIQUE

(30) Priorität: 14.10.2011 DE 102011115914
(43) Veröffentlichungstag der Anmeldung: 20.08.2014
(73) Patentinhaber: Voith Patent GmbH, 89522 Heidenheim (DE)
(72) Erfinder: DENTELER, Frieder, 86720 Nördlingen (DE); SCHWAB, Thomas, 89522 Heidenheim (DE)
(74) Vertreter: Dr. Weitzel & Partner
(86) Internationale Anmeldenummer: PCT/EP2012/070266
(87) Internationale Veröffentlichungsnummer: WO 2013/053893

(56) Entgegenhaltungen:
- EP-A1- 0 312 357
- EP-A2- 2 280 196
- DE-A1- 4 304 403
- US-A1- 2009 134 848

## Beschreibung

Die Erfindung betrifft eine hydrostatische Antriebsvorrichtung für einen Generator nach der im Oberbegriff von Anspruch 1 näher definierten Art. Außerdem betrifft die Erfindung ein Verfahren zum Betreiben einer solchen hydrostatischen Antriebsvorrichtung. Ferner betrifft die Erfindung eine Verwendung der hydrostatischen Antriebsvorrichtung beziehungsweise des Verfahrens zu ihrem Betrieb.

Hydrostatische Antriebsvorrichtungen sind aus dem allgemeinen Stand der Technik bekannt. Sie können beispielsweise zum Antrieb von Hilfsmaschinen eingesetzt werden. Ein typisches Anwendungsbeispiel für eine hydrostatische Antriebsvorrichtung ist beispielsweise der Antrieb eines Generators, insbesondere eines Synchrongenerators, welcher zur Erzeugung von elektrischer Leistung in einem Bordnetz, beispielsweise dem Bordnetz eines Schienenfahrzeugs, eingesetzt wird. Das Schienenfahrzeug wird dann typischerweise über einen Verbrennungsmotor angetrieben. Über einen Nebenabtrieb treibt der Verbrennungsmotor zum Beispiel direkt oder über ein dem Verbrennungsmotor nachgeschaltetes Getriebe eine Verstellpumpe der hydrostatischen Antriebsvorrichtung an, um einen Volumenstrom eines Arbeitsmediums zu erzeugen. Die Verstellpumpe ist typischerweise über einen Förderstromregler mit einer Messblende so ausgerüstet, dass trotz der gegebenenfalls schwankenden Antriebsdrehzahl des Verbrennungsmotors und damit der Verstellpumpe ein konstanter Volumenstrom möglich ist. Über einen Konstantmotor, welcher von dem Volumenstrom des Arbeitsmediums angetrieben ist, wird dann der Antrieb des Generators realisiert. Ein solcher Aufbau wird beispielsweise in der DE 43 04 403 A1 beschrieben.

Die Problematik liegt nun darin, dass das Einstellen des benötigten Volumenstroms über den Förderstromregler mit der Messblende vergleichsweise aufwändig ist, da eine Vielzahl von Komponenten, beispielsweise die Messblende, die Verrohrung zwischen den Bauteilen, der Hydromotor, der Generator selbst usw. zusammenspielen. Da Spannung und Frequenz am Generator durch den Volumenstrom und die Drehzahl entsprechend beeinflusst werden, ist hier eine sehr gute Regelung des Volumenstroms notwendig, um insbesondere keine Frequenzschwankungen in der von dem Generator erzeugten Leistung zu erhalten, welche in dem von dem Generator gespeisten elektrischen Netz zu Problemen führen könnten. Weitere Spezifikationen des elektrischen Netzwerks, wie beispielsweise das Aufschalten einer größeren induktiven Last, welche den hydrostatischen Antrieb ebenfalls belasten, müssen außerdem ohne nennenswerte Änderung der Generatordrehzahl ausgeregelt werden können.

All dies stellt eine vergleichsweise große Herausforderung dar, sodass das Zusammenspiel der einzelnen Komponenten an jedem einzelnen hydrostatischen Antrieb in der heutigen Praxis getestet und angepasst wird, um eine optimierte Regelung für die Drehzahl des Generators zu erzielen. Dies ist aufwändig und teuer.

US 2009/134848 A1 beschreibt eine hydrostatische Antriebsvorrichtung, deren Merkmale im Oberbegriff von Anspruch 1 zusammengefasst sind.

Weitere hydrostatische Antriebsvorrichtungen sind unter anderem aus
DE 43 04 403 A1
EP 2 280 196 A2
EP 0 312 357 A1
bekannt geworden.

Die Aufgabe der hier vorliegenden Erfindung besteht nun darin, eine hydrostatische Antriebsvorrichtung anzugeben, welche diese Problematik vermeidet, und welche eine schnelle, einfache und effiziente Regelung der Drehzahl des angetriebenen Generators ermöglicht.

Erfindungsgemäß wird diese Aufgabe durch eine hydrostatische Antriebsvorrichtung mit den Merkmalen im kennzeichnenden Teil des Anspruchs 1 gelöst. Außerdem löst ein Verfahren zum Betreiben einer solchen hydrostatischen Antriebsvorrichtung mit den Merkmalen im kennzeichnenden Teil des Anspruchs 5 die Aufgabe. Weitere vorteilhafte Ausgestaltungen ergeben sich aus den hiervon abhängigen Unteransprüchen und der Verwendung der hydrostatischen Antriebsvorrichtung beziehungsweise des Verfahrens zu ihrem Betrieb.

Die erfindungsgemäße hydrostatische Antriebsvorrichtung erweitert den aus dem Stand der Technik bekannten Aufbau um einen Bypass mit einem Regelventil für den Volumenstrom, welcher um den Konstantmotor zum Antreiben des Generators angeordnet wird. Zusätzlich zur bestehenden Regelung über den Förderstromregler mit der Messblende wird also eine zusätzliche Regelungsmöglichkeit vorgesehen, indem ein Bypass mit einem Regelventil um den Konstantmotor angeordnet wird. Dieses Regelventil kann dann beispielsweise in einer bevorzugten Ausführungsform der Erfindung als Proportionalventil ausgebildet sein, welches äußerordentlich schnell und effizient auf eventuelle Schwankungen in der Drehzahl des Konstantmotors beziehungsweise des Generators reagiert. Damit lässt sich sehr einfach und effizient die Drehzahlkonstanz des Generators verbessern und damit Frequenz und Spannung in dem von dem Generator gespeisten elektrischen Netzwerk stabilisieren. Erfindungsgemäß ist ein zweiter Bypass um den Konsta,tmotor vorgesehen, welcher ein Zweiwegeventil aufweist, wobei das Regelventil und das Zweiwegeventil in einer Baueinheit integriert ausgebildet sind. Insbesondere die Ausgestaltung des Regelventils als Proportionalventil ist dabei von besonderem Vorteil, da ein solches Proportionalventil eine sehr schnelle Reaktionszeit von weniger als 200 ms aufweist und darüber hinaus eine druckunabhängige Funktion bei geringem Druckverlust gewährleisten kann. Erfindungsgemäß ist ein zweiter Bypass um den Konstantmotor vorgesehen, welcher ein Zweiwegeventil aufweist, wobei das Regelventil und das Zweiwegeventil in einer Baueinheit integriert ausgebildet sind.

Gemäß einer besonders günstigen und vorteilhaften Ausgestaltung der erfindungsgemäßen hydrostatischen Antriebsvorrichtung kann dabei eine Regelelektronik vorgesehen sein, welche zur Erfassung der Drehzahl des Generators vorgesehen ist, und welche zur Betätigung des Regelventils in Abhängigkeit dieser Drehzahl ausgebildet ist. Insbesondere durch die Erfassung der Generatordrehzahl selbst und einer entsprechenden Beeinflussung des Regelventils in dem Bypass kann so sehr schnell und effizient die Drehzahl des Generators selbst auf einen konstanten Wert geregelt werden. Eventuelle Abweichungen und Regelschwingungen innerhalb des Gesamtsystems lassen sich damit sehr effizient und schnell ausregeln. Auch eventuelle Ölleckagen im Bereich der hydrostatischen Antriebsvorrichtung, Alterungserscheinungen und dergleichen können durch diesen Regelmechanismus sehr effizient und einfach ausgeregelt werden. Dies gilt ebenso für Unterschiede des Volumens des Arbeitsmediums aufgrund einer unterschiedlichen Temperatur oder einer temperaturabhängig unterschiedlichen Ölviskosität. Daneben können auch Schwingungen und Alterungserscheinungen innerhalb des Systems ideal ausgeregelt werden.

Ein Verfahren zum Betreiben einer derartigen hydrostatischen Antriebsvorrichtung sieht es dabei vor, dass die Drehzahlregelung des Generators zuerst durch eine Grobregelung mittels des Förderstromreglers erfolgt, wobei der Volumenstrom auf einen Wert geregelt wird, welcher sich aus einem Sollwert plus einem Überschuss zusammensetzt, wobei die Feinregelung danach durch das Regelventil in dem Bypass um den Konstantmotor erfolgt. Insbesondere ein solcher Betrieb, bei dem der bisher bekannte und übliche Förderstromregler mit der Messblende zur Beeinflussung der Verstellpumpe genutzt wird, um einen Volumenstrom grob einzustellen, und zwar mit einem gewissen Überschuss an Volumenstrom, welcher sich vorzugsweise in der Größenordnung von weniger als 10 Prozent des Sollwerts bewegt, kann ideal genutzt werden, um die grobe Übertragung der Leistung in der gewünschten Art und Weise sicherzustellen, ohne nennenswerte Leistungsverluste zu generieren, wie sie bei einer alleinigen Bypassregelung unvermeidlich wären. Vielmehr lässt sich der Aufbau der erfindungsgemäßen hydrostatischen Antriebsvorrichtung in vorteilhafter Weise so betreiben, dass lediglich der am Förderstromregler eingestellte Überschuss zur Feinregelung der Drehzahl des Generators über das Regelventil in dem Bypass genutzt wird. Damit lässt sich eine sehr genaue, effiziente und schnelle Regelung bei hoher übertragener Leistung und minimalen Leistungsverlusten durch die Regelung, realisieren.

Ein weiterer Vorteil des Verfahrens besteht darin, dass durch den zusätzlichen Überschuss, welcher erfindungsgemäß geregelt wird, ein sehr sicheres System entsteht. Sollte hier etwas ausfallen, dann steht die weiterhin unter der erfindungsgemäßen Regelung arbeitende herkömmliche Regelung nach wie vor zur Verfügung, sodass ein sehr sicheres, redundantes System mit idealen Notlauffunktionen entsteht.

Die erfindungsgemäße hydrostatische Antriebsvorrichtung sowie das Verfahren zum Betreiben derselben ist also hocheffizient und erlaubt trotz schwankender Drehzahlen des Antriebsaggregats für die Verstellpumpe eine sehr konstante Drehzahl des Generators, und damit sehr konstante elektrische Größen in dem von dem Generator gespeisten elektrischen Netz. Die hydrostatische Antriebsvorrichtung und das Verfahren zum Betreiben derselben eignen sich daher insbesondere für die Verwendung in einem Schienenfahrzeug, in dem sie zur Bordstromversorgung eingesetzt werden. Die typischerweise über den Fahrmotor beziehungsweise einen Nebenabtrieb des Fahrmotors angetriebene Verstellpumpe der hydrostatischen Antriebsvorrichtung wird unvermeidlich mit schwankenden Drehzahlen angetrieben. Eine Grobregelung des Volumenstroms über die Messblende und den Förderstromregler setzt diese schwankende Drehzahl schon sehr gut in einen konstanten Volumenstrom um. Dieser erlaubt eine annähernd konstante Drehzahl des Generators, welcher wiederum über den Konstantmotor angetrieben wird. Durch die erfindungsgemäße zusätzliche Feinregelung lassen sich nun letzte Ungenauigkeiten, Schwingungen in dem System, alterungs- oder temperaturabhängige Schwankungen, minimale Ölleckagen oder dergleichen ideal ausregeln, sodass auch in diesen schwierigen Fällen, wie sie insbesondere bei Schienenfahrzeugen sehr häufig auftreten, ein sehr konstanter Betrieb des Generators möglich ist.

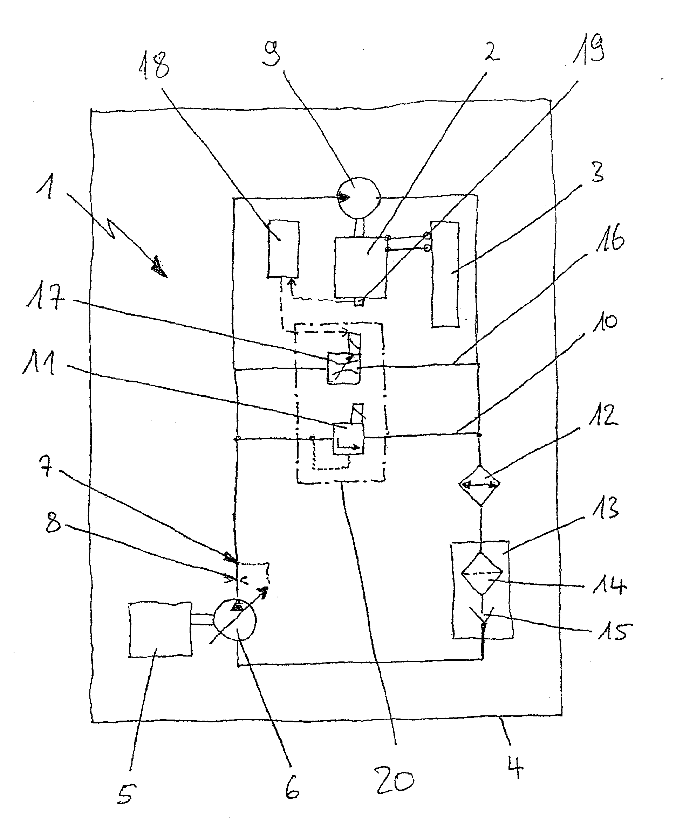

Weitere vorteilhafte Ausgestaltungen der erfindungsgemäßen Antriebsvorrichtung und/oder des Verfahrens zum Betreiben der Antriebsvorrichtung ergeben sich aus den restlichen abhängigen Ansprüchen und werden anhand des Ausführungsbeispiels deutlich, welches nachfolgend unter Bezugnahme auf die Figur näher beschrieben wird.

Die einzige beigefügte Figur zeigt eine beispielhafte hydrostatische Antriebsvorrichtung gemäß der Erfindung.

In der Figur ist eine hydrostatische Antriebsvorrichtung 1 für einen Generator 2, insbesondere einen Synchrongenerator 2, zu erkennen. Der Synchrongenerator 2 soll dabei ein prinzipmäßig angedeutetes Bordnetz 3 eines Schienenfahrzeugs 4, welches lediglich als Kasten angedeutet ist, mit elektrischer Leistung versorgen. Zum Antrieb des Schienenfahrzeugs 4 dient dabei ein Antriebsmotor, beispielsweise ein Dieselmotor 5, welcher zumindest mittelbar außerdem eine Verstellpumpe 6 der hydrostatischen Antriebsvorrichtung 1 antreibt. Drehzahlen und Leistung des Dieselmotors 5 richten sich dabei im Schwerpunkt nach den Anforderungen zum Antreiben des Schienenfahrzeugs 4. Der Antrieb der Verstellpumpe 6 erfolgt typischerweise über einen Nebenabtrieb. Die Verstellpumpe 6 wird daher unweigerlich mit den schwankenden Drehzahlen des Dieselmotors 5 angetrieben. Da aber für die Stabilität des Bordnetzes 3, und hier insbesondere für Frequenz und Spannung des Synchrongenerators 2, die Drehzahl des Synchrongenerators 2 von entscheidender Bedeutung ist, erfolgt eine Regelung des Volumenstroms an Arbeitsmedium in der hydrostatischen Antriebsvorrichtung 1 über einen Förderstromregler 7 mit einer Messblende 8, welcher die Verstellpumpe 6 entsprechend beeinflusst und so für einen annähernd konstanten Volumenstrom des Arbeitsmediums sorgt. Dieser Volumenstrom des Arbeitsmediums treibt dann einen Konstantmotor 9 an, welcher seinerseits den Synchrongenerator 2 entsprechend antreibt. Eine konstante Drehzahl im Bereich des Konstantmotors 9 sorgt dann für eine konstante Drehzahl im Bereich des Synchrongenerators 2. Dies wird bei dem bisher bekannten und üblichen Aufbau alleine über die Förderstromregelung 7 und die Beeinflussung der Verstellpumpe 6 erreicht. In dem hier dargestellten Aufbau der hydrostatischen Antriebsvorrichtung 1 ist außerdem ein Bypass 10 mit einem Bypassventil 11 um den Konstantmotor 9 vorgesehen. Dieses Bypassventil 11 wird im Normalbetrieb geschlossen gehalten und kann zum Abstellen des Konstantmotors 9 beziehungsweise zu einer Schnellabschaltung des Synchrongenerators 2 entsprechend geöffnet werden. Weitere Komponenten der hydrostatischen Antriebsvorrichtung 1 sind ein Ölkühler 12 sowie ein Ölbehälter 13 mit Ölfilter 14 und Injektor 15. Der soweit beschrieben Aufbau ist dabei allgemein bekannt und üblich.

Die Problematik liegt nun darin, das für das Zusammenbeispiel beispielsweise der Messblende 8 der Verrohrung des Hydromotors beziehungsweise Konstantmotors 9 und des Synchrongenerators 2 in jeder einzelnen Antriebsvorrichtung 1 unterschiedliche Gegebenheiten vorliegen, welche die Regelung des Volumenstroms entsprechend beeinflussen und damit Einfluss auf Spannung und Frequenz des Synchrongenerators 2 haben. Um unter allen Gegebenheiten einen sicheren und zuverlässigen Betrieb des Synchrongenerators 2 mit konstanter Drehzahl erreichen zu können, ist es daher häufig notwendig, jede einzelne hydrostatische Antriebsvorrichtung 1 entsprechend abzustimmen, um die Regelung so einzustellen, dass Spannung und Frequenz am Synchrongenerator 2 in den vorgegebenen Grenzen bleiben. Außerdem kann es zu Schwankungen in Form von Störgrößen kommen, beispielsweise in Form von einer sich ändernden Temperatur, welche das Volumen und die Ölviskosität entsprechend beeinflusst. Ferner sind Ölleckagen und Alterungserscheinungen in der hydrostatischen Antriebsvorrichtung 1 Störgrößen, welche die Regelung nachteilig beeinflussen. Auch Schwingungen innerhalb des Systems, insbesondere Regelschwingungen bei der Einstellung des Volumenstroms, können sich nachteilig auswirken und die hydrostatische Antriebsvorrichtung 1 "aufschaukeln". All dies kann zu einer Schwankung in der Drehzahl des Synchrongenerators 2 führen, welche in gewissen Grenzen noch tolerierbar ist, aber sehr schnell so groß wird, dass es zu Problemen hinsichtlich von Spannung und Frequenz des Synchrongenerators 2 in dem Bordnetz 3 kommen kann.

Der hier beschriebene Aufbau der hydrostatischen Antriebsvorrichtung 1 weist daher einen weiteren Bypass 16 um den Konstantmotor 9 auf, welcher ein Regelventil 17 aufweist. Dieses Regelventil 17, welches insbesondere als Proportionalventil ausgebildet sein kann, kann sehr schnell einen entsprechenden Durchfluss einstellen. Dieses Regelventil 17 wird dabei über eine Regelelektronik 18 angesteuert. Die Regelelektronik 18 verwendet dabei einen PID-Regler. Die Regelung erfolgt in Abhängigkeit der Drehzahl des Synchrongenerators 2, welche in dem hier dargestellten Ausführungsbeispiel über einen Drehzahlsensor 19 erfasst und an die Regelelektronik 18 gemeldet wird. Als Drehzahlsensor eignet sich dabei insbesondere ein hochauflösendes Messzahnrad, welches eine sehr schnelle und präzise Erkennung von Drehzahlschwankungen gewährleistet. Über einen Microcontroller im Bereich der Regelelektronik 18 kann dann über den sehr schnellen PID-Regler in Echtzeit auf Drehzahlschwankungen reagiert werden.

Auch eine mittelbare Erfassung der Drehzahl, zum Beispiel über die Frequenz der erzeugten elektrischen Leistung, ist selbstverständlich möglich.

Der hier beschriebene Aufbau der hydrostatischen Antriebsvorrichtung 1 erlaubt so eine sehr exakte Regelung der Drehzahl des Synchrongenerators 2 auf einen vorgegebenen typischerweise konstanten Wert. Dies erfolgt dabei in idealer Weise so, dass ein vorgegebener Volumenstrom über den Förderstromregler 7 eingestellt wird. Dieser Volumenstrom weist dabei einen gewissen Überschuss über einem vorgegebenen Sollwert auf, er kann beispielsweise in der Größenordnung von 225 l/min liegen, wenn die Sollgröße des Volumenstroms bei beispielsweise 200 l/min liegt. Der Überschuss von 25 l/min kann dann über den weiteren Bypass 16 und das Regelventil 17 so beeinflusst werden, dass im Bereich des Konstantmotors 9 in Abhängigkeit der Drehzahl des Synchrongenerators 2 ein Volumenstrom in der Größenordnung von 200 bis 225 l/min anliegt. Dabei kann über das Regelventil 17 eine sehr schnelle Ausregelung auf die über den Sensor 19 erfasste Drehzahl des Synchrongenerators 2 erfolgen. Damit lassen sich die gewünschten elektrischen Größen wie Spannung und Frequenz in dem Bordnetz 3 sehr konstant halten. Lediglich ein vergleichsweise kleiner Teil des Volumenstroms des Arbeitsmediums wird dabei über das Regelventil 17 und den Bypass 16 geleitet, sodass die Leistungsverluste, welche durch diese Art der Regelung entstehen, vergleichsweise gering sind. Die Regelung ist so konzipiert, dass sie typischerweise mit einem Bypassstrom in der Größenordnung von 2 - 10 Prozent des Sollwerts als Überschuss auskommt. Selbstverständlich gibt es auch Regelsituationen, in denen ein noch kleinerer oder kein Überschuss notwendig ist.

Die Regelung ist aufgrund des sehr schnellen Ansprechverhaltens von Proportionalventilen, welche problemlos im Bereich von weniger als 100 ms liegen kann, sehr schnell. Sie verursacht lediglich einen sehr geringen Druckverlust und ist sehr unempfindlich gegenüber Druckschwankungen oder Drucksprüngen in dem Arbeitsmedium. Eine mögliche Art für ein hier sehr gut verwendbares Proportionalventil ist ein sogenanntes druckkompensiertes Stromregelventil, bei welchem eine Proportionalstellung des Ventils durch den Stellmechanismus bei Druckschwankungen nicht verändert werden muss, da das Ventil diese Druckschwankungen selbsttätig kompensiert. Eine Alternative dazu wäre ein reines Proportional-Drosselventil, welches nicht in der oben genannten Art druckkompensiert ist, welches hier jedoch ebenfalls eine sehr gute Funktionalität bereitstellen kann.

Die Ansteuerung des Proportionalventils kann vorzugsweise über ein pulsweitenmoduliertes Signal erfolgen. Dadurch kommt es zu einer ständigen geringen Stellbewegung des Proportionalventils, praktisch einem Schwingen des Proportionalventils um die gewünschte Sollstellung. Hierdurch werden Übergänge eines stehenden Stellglieds von der Haftreibung in die Gleitreibung verhindert, da das Stellglied ständig bewegt wird. Durch die Vermeidung des Stick-Slip-Effekts kann so eine extrem schnelle Reaktion des Proportionalventils in der Regelung erreicht werden.

Der Grobregelung des Volumenstroms über den Förderstromregler wird also eine Feinregelung über das Regelventil 17 und den weiteren Bypass 16 überlagert. Das Regelverhalten wird dadurch deutlich verbessert, insbesondere können Alterungserscheinungen, Schwingungen, Einflüsse aufgrund von Ölviskosität und/oder Temperatur oder auch leichte Leckagen des Arbeitsmediums ausgeregelt werden, ohne dass dies einen negativen Einfluss auf die Drehzahl des Synchrongenerators hätte.

Der Aufbau ist dabei sehr einfach und effizient. Er kann insbesondere in einem Bauteil mit dem Bypass 10 und dem Bypassventil 11 zur Abschaltung des Konstantmotors 9 integriert ausgebildet sein. Dafür können das Bypassventil 11 und das Regelventil 17 in einem Gehäuse untergebracht werden, sodass weiterhin ein sehr kompakter Aufbau entsteht.

Dadurch, dass hier nicht mehr auf eine hydrostatische Größe geregelt wird, also ein konstanter Volumenstrom, sondern dass die hydrostatische Größe in Abhängigkeit der eigentlichen Zielgröße, nämlich der Drehzahl des Synchrongenerators 2 direkt geregelt wird, lassen sich Unzulänglichkeiten, Toleranzen, Alterungserscheinungen und dergleichen, welche in dem hydrostatischen Antriebssystem 1 beziehungsweise seinen Komponenten selbst auftreten, leicht ausregeln.

## Patentansprüche

1. Hydrostatische Antriebsvorrichtung (1) für einen Generator (2), mit:
1.1 einer Verstellpumpe (6) zum Erzeugen eines Volumenstroms eines Arbeitsmediums;
1.2 einem von dem Volumenstrom des Arbeitsmediums angetriebenen Konstantmotor (9) zum Antreiben des Generators (2),
1.3 einem Förderstromregler (7) mit einer Messblende (8) zum Regeln des Volumenstroms der Verstellpumpe (6), wobei
1.4 um den Konstantmotor (9) ein Bypass (16) mit einem Regelventil (17) für einen Volumenstrom durch den Bypass (16) angeordnet ist;
**dadurch gekennzeichnet, dass**
1.5 ein zweiter Bypass (10) um den Konstantmotor (9) vorgesehen ist, welcher ein Zweiwegeventil (11) aufweist, wobei das Regelventil (17) und das Zweiwegeventil (11) in einer Baueinheit integriert ausgebildet sind.

2. Hydrostatische Antriebsvorrichtung (1) nach Anspruch 1, **dadurch gekennzeichnet, dass** das Regelventil (17) als Proportionalventil ausgebildet ist.

3. Hydrostatische Antriebsvorrichtung (1) nach Anspruch 1 oder 2, **dadurch gekennzeichnet, dass** eine Regelelektronik (18) zum Erfassen der Drehzahl des Generators (2) vorgesehen ist, welche zur Betätigung des Regelventils (17) in Abhängigkeit dieser Drehzahl ausgebildet ist.

4. Hydrostatische Antriebsvorrichtung (1) nach einem der Ansprüche 1 bis 3, **dadurch gekennzeichnet, dass** der Generator (2) als Synchrongenerator ausgebildet ist.

5. Verfahren zum Betreiben einer hydrostatischen Antriebsvorrichtung (1) nach einem der Ansprüche 1 bis 4, **dadurch gekennzeichnet, dass** die Drehzahlregelung des Generators (2) zuerst durch eine Grobregelung mittels des Förderstromreglers (7) erfolgt, wobei der Volumenstrom auf einen Wert eingestellt wird, welcher sich aus einem Sollwert und einem Überschuss zusammensetzt, wobei die Feinregelung danach durch das Regelventil (17) in dem Bypass (16) erfolgt.

6. Verfahren nach Anspruch 5, **dadurch gekennzeichnet, dass** der Überschuss auf weniger als 20 % des Sollwerts, vorzugsweise weniger als 10 % des Sollwerts, festgelegt wird.

7. Verfahren nach Anspruch 5 oder 6, **dadurch gekennzeichnet, dass** die aktuelle Drehzahl des Generators (2) erfasst wird, und das Regelventil (17) auf die vorgegebene Drehzahl geregelt wird.

8. Verwendung einer hydrostatischen Antriebsvorrichtung (1) nach einem der Ansprüche 1 bis 4, und/oder eines Verfahrens zum Betreiben dieser hydrostatischen Antriebsvorrichtung (1) nach einem der Ansprüche 5 bis 7 zur Versorgung eines Bordnetzes (3) in einem Schienenfahrzeug (4) mit elektrischer Leistung.

## Claims

1. A hydrostatic drive device (1) for a generator (2), comprising:
1.1 a variable displacement pump (6) for generating a flow rate of a working fluid;
1.2 a fixed displacement motor (9) driven by the flow rate of the working fluid for driving the generator (2),
1.3 a flow rate regulator (7) having an orifice plate (8) for controlling the flow rate of the variable displacement pump (6), wherein
1.4 a bypass (16) having a control valve (17) for a flow rate through the bypass (16) is arranged around the fixed displacement motor (9);
**characterized in that**
1.5 a second bypass (10) having a two-way valve (11) is disposed around the fixed displacement motor (9), the control valve (17) and the two-way valve (11) being formed to be integrated in one constructional unit.

2. The hydrostatic drive device (1) according to claim 1, **characterized in that** the control valve (17) is formed as a proportional valve.

3. The hydrostatic drive device (1) according to claim 1 or 2, **characterized in that** a control electronics (18) for detecting the speed of the generator (2) is provided, which is configured for actuating the control valve (17) depending on said speed.

4. The hydrostatic drive device (1) according to any one of the claims 1 to 3, **characterized in that** the generator (2) is configured as a synchronous generator.

5. A method for operating a hydrostatic drive device (1) according to any one of the claims 1 to 4, **characterized in that** controlling the speed of the generator (2) is first performed through a coarse control by means of the flow rate regulator (7), wherein the flow rate is set to a value being composed of a setpoint value and an excess, wherein the fine control is performed after that through the control valve (17) in the bypass (16).

6. The method according to claim 5, **characterized in that** the excess is set to less than 20 % of the setpoint value, preferably less than 10 % of the setpoint value.

7. The method according to claim 5 or 6, **characterized in that** the current speed of the generator (2) is detected, and the control valve (17) is controlled to the predetermined speed.

8. Use of a hydrostatic drive device (1) according to any one of the claims 1 to 4 and/or of a method for operating said hydrostatic drive device (1) according to any one of the claims 5 to 7 for supplying a power system (3) in a rail vehicle (4) with electric power.

## Revendications

1. Dispositif d'entrainement hydrostatique (1) de générateur (2), comportant :
1.1 une pompe à cylindrée variable (6) dans le but de générer un courant volumique de fluide de travail;
1.2 un moteur à cylindrée constante (9) d'actionnement du générateur (2), entrainée par le courant volumique de fluide de travail,
1.3 un régulateur de débit (7) avec un orifice de mesure (8) pour régler le courant volumique de la pompe à cylindrée variable (6), tandis que
1.4 autour du moteur à cylindrée constante (9) est disposé un bypass (16) avec une soupape de réglage (17) d'un courant volumique passant à travers le bypass (16);
**caractérisé en ce que**
1.5 autour du moteur à cylindrée constante (9), est prévu un deuxième bypass (10) présentant une vanne à deux voies (11), la soupape de réglage (17) et la vanne intégrée à deux voies (11) étant réalisées de façon intégrée dans une unité de construction unique.

2. Dispositif d'entrainement hydrostatique (1) selon la revendication 1, **caractérisé en ce que** la soupape de réglage (17) est réalisée sous la forme d'une valve proportionnelle.

3. Dispositif d'entrainement hydrostatique (1) selon les revendications 1 ou 2, **caractérisé en ce qu'**il est prévu pour enregistrer la vitesse de rotation du générateur (2), une électronique de réglage (18) qui est réalisée pour actionner la soupape de réglage (17) en interdépendance avec cette vitesse de rotation.

4. Dispositif d'entrainement hydrostatique (1) selon l'une des revendications 1 à 3, **caractérisé en ce que** le générateur (2) est réalisé sous la forme d'un générateur synchrone.

5. Procédé pour faire fonctionner un dispositif hydrostatique de commande (1) selon l'une des revendications 1 à 4, **caractérisé en ce que** la régulation de vitesse du générateur (2) s'exécute d'abord par un réglage grossier en mesure du régulateur de débit (7), le courant volumique étant réglé sur une valeur qui se compose d'une valeur de consigne et d'un excédent, tandis que le réglage fin s'exécute ensuite dans le bypass (16) par l'intermédiaire de la soupape de réglage (17).

6. Procédé selon la revendication 5, **caractérisé en ce que** l'excédent est établi sur moins de 20 % de la valeur prescrite, de préférence moins de 10 % de la valeur prescrite.

7. Procédé selon les revendications 5 ou 6, **caractérisé en ce que** la vitesse effective de rotation du générateur (2) est enregistrée, et que la soupape de réglage (17) est réglée sur la vitesse de rotation prescrite.

8. Utilisation d'un dispositif d'entrainement hydrostatique (1) selon l'une des revendications 1 à 4, et/ou d'un procédé pour faire fonctionner ce dispositif d'entrainement hydrostatique (1) selon l'une des revendications 5 à 7, pour faire fonctionner ce dispositif d'entrainement hydrostatique (1) pour l'alimentation de puissance électrique d'un réseau de bord (3) dans un véhicule sur rails (4).
